# EUROPEAN PATENT APPLICATION

(11) **EP 1 065 149 A2**
(43) Date of publication of application: **03.01.2001**
(21) Application number: 00304931.9
(22) Date of filing: 09.06.2000
(51) Int. Cl.: B65D 41/04

(54) **Moulded closure and method of manufacture**

(30) Priority: 01.07.1999 GB 9915273
(71) Applicant: DRAGON PLASTICS LIMITED, Pontypridd, Mid Glamorgan CF37 5TF (GB)
(72) Inventor: Walding, Dean, Treharris, Mid-Glamorgan CF46 5HQ (GB)
(74) Representative: Chettle, Adrian John

(57) **Abstract**

A moulded closure for a container has a seal (41) moulded through the wall of a screw threaded cap (10). The seal material may extend over the outer surface of the cap to enhance grippability thereof. A moulding method includes backing-off an inner mould part (21) to define a seal cavity (31), after the cap has been moulded.

## Description

This invention concerns a closure of moulded plastic, and more particularly a closure having an integral moulded seal.

Plastic screw closures of e.g. polypropylene are well known. It is sometimes necessary to provide a seal between the closure and the container to which it is to be fitted, for example to prevent leakage of liquid. Such a seal is usually inserted into the closure after moulding, and thus requires separate manufacturing and assembly steps. Occasionally a separate seal may not seat in the closure or on the container, and this may result in leakage of the contents of the container.

What is required is a seal that does not require a separate assembly step, that is inexpensive, reliable and easily manufactured, and is generally more precise.

According to the invention there is provided a moulded plastics closure for a container, the closure comprising a cap having an end wall and a skirt, and a seal moulded therein through an aperture in said cap. Preferably the aperture is in the end wall. In a preferred embodiment said aperture is substantially annular.

Such a closure can be injection moulded in two stages, a suitable material for the seal being injected immediately after the material of the cap. Typically the cap is moulded of polypropylene whereas the seal is moulded of a relatively soft elastomer such as TPE (tetraphenylethylene).

Moulding of the seal through the end wall is especially advantageous if the seal moulding cavity is formed by backing-off the part of the mould which defines the cap interior, the feed channel for the seal being defined by a removable outer mould part.

In a preferred embodiment the exterior of the cap is overmoulded with the material of the seal. Such an overmoulding results in a soft grippable closure which is especially useful for containers which may in use become wet, for example containers for shampoo or shower gel. A soft overmoulding also improves grippability on tightly secured closures.

The overmoulding may encompass the entire outer surface of the end wall and skirt, or only part thereof. Where the end wall aperture is substantially annular, the overmoulding may be coincident with this aperture. Such a two component closure can be designed to be distinctive and colourful. The overmoulding may increase the outside diameter of the cap to enhance grippability thereof.

The invention also provides a method of injection moulding a plastics closure, the method comprising:
moulding a cap having an aperture in the wall thereof;
substituting an outer mould to define an injection path through said aperture;
backing-off an inner mould part to define a seal cavity; and
moulding a seal through said injection path.

Preferably the aperture is defined in the end wall, and the cap is moulded on an injection moulding machine having a pivotable platten, the outer mould part being substituted as the inner mould part and freshly moulded cap pivots from the first to the second moulding position.

Preferably the cap is a screw cap, and the inner mould part unscrews to define the seal cavity.

Other features of the invention will be apparent from the following description of two preferred embodiments shown by way of example only in the accompanying drawings in which:-
Fig. 1 is an axial section through a cap forming part of a closure of the invention;
Fig. 2 is a partial axial section through a primary mould for the closure of Fig. 1; and
Fig. 3 is a partial axial section through a secondary mould corresponding to Fig. 2.

Although the invention has been described in relation to a screw-threaded closure, it is equally applicable to other kinds of closure, for example those which rely on snap-fitting or are hinged.

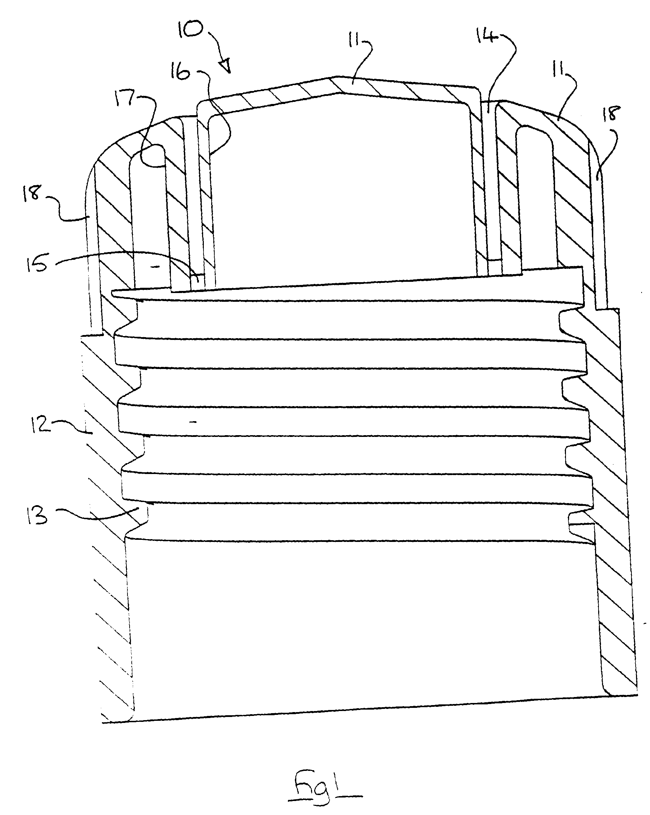

With reference to Fig. 1, a cap 10 of e.g. polypropylene comprises an end wall 11 and a skirt 12 having an internal thread 13. An annular channel 14 is defined in the end wall, the inner side of the channel being linked to the outer side by spokes 15. The channel 14 extends axially of the cap and is defined by annular walls 16,17. Axially extending ribs 18 are provided on the upper part of the skirt as illustrated.

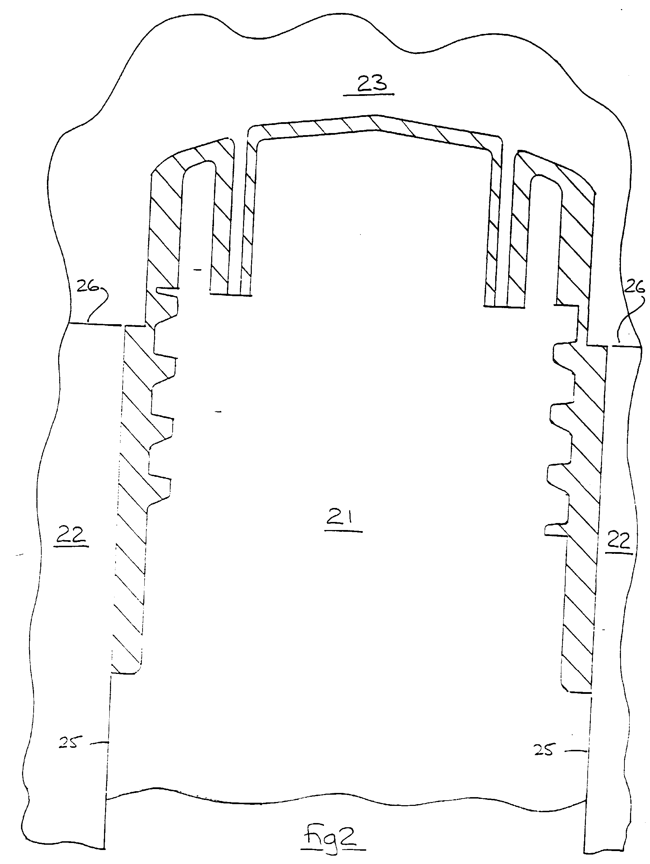

Fig. 2 shows an injection mould for the cap comprises a core 21, a skirt mould 22 and an end wall mould 23. Representative split lines 25,26 between the respective mould parts are indicated, but the skilled man will choose an appropriate design to suit the configuration of the cap. Feed channels for the injection moulding material are not shown, but can be provided in any suitable location.

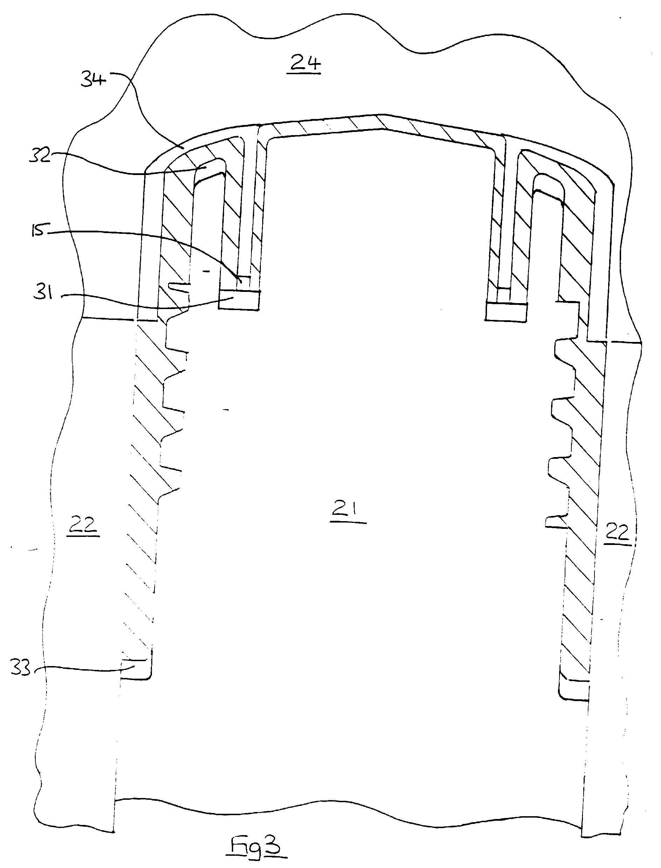

After moulding of the cap, the core 21 is unscrewed in order to define a seal cavity 31 (Fig. 3). The annular walls 16,17 permit axial core movement and thus definition of the inner and outer circumferential walls of the seal. Cavities 32,33 (and others not shown) are also formed, but are enclosed and have no function.

The outer mould is removed, and replaced by a secondary outer mould 24 The channels 14 are clear apart from the spokes 15, and an overmoulding cavity 34 is defined over the end wall, as illustrated. The overmoulding/seal material is then injected through the outer mould 24 thus forming at the same time a seal and a grippable annulus on the cap.

The closure is then removed from the mould conventionally. The overmoulding adheres to the cap and is further secured against relative rotation by the spokes 15.

The overmoulding may of course cover the entire surface of the end wall 11, and/or may extend radially outwardly to form a mushroom like head, the increased diameter of which may enhanced grippability.

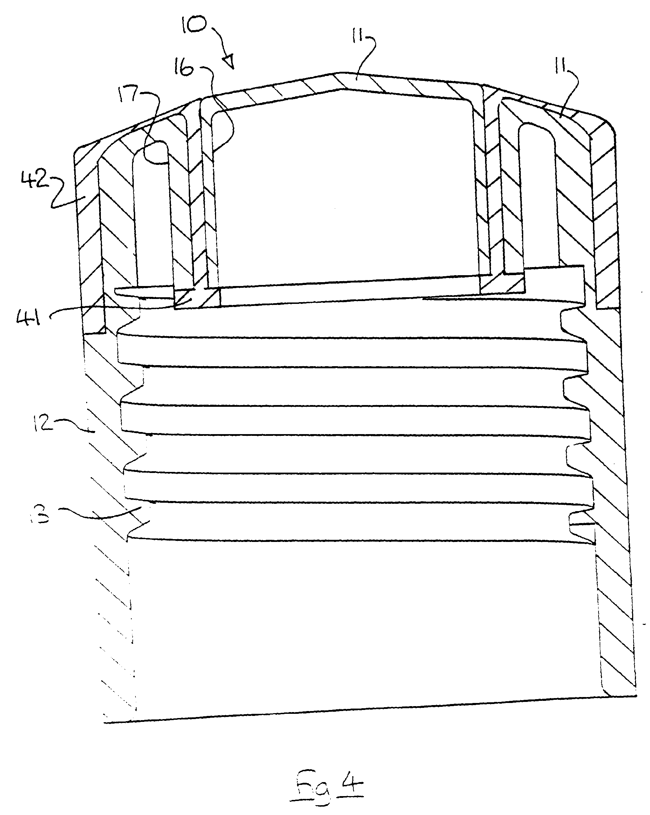

A typical moulded closure is illustrated in Fig. 4. The annular seal 41 is complete notwithstanding the spokes 15. Additional rotational security of the overmoulding is provided by the ribs 18. The overmoulding 42 defines a relatively soft grippable surface.

The core 21 may comprise co-axial parts consisting of a central stationary component defining the wall 16 and an outer cylindrical part defining the thread 13, and relatively rotatable with respect to the inner stationary component. Such an arrangement allows cogs of the inner component to engage the wall 16 and thereby prevent relative rotation of the cap as the outer cylindrical part unscrews to define the seal cavity 31.

Although the seal cavity extends across the underside of walls 16,17, it need not do so provided the mouth of the container is precisely aligned with the channel 14.

## Claims

1. A moulded plastics closure for a container, the closure comprising a cap (10) having an end wall (11) and a skirt (12), and a seal (41) moulded therein through an aperture (14) in said cap.

2. A closure according to claim 1 wherein said aperture (14) is in the end wall (11).

3. A closure according to claim 2 wherein said aperture (14) is substantially annular.

4. A closure according to any preceding claim wherein the exterior of said cap (10) is overmoulded with the material of said seal (41).

5. A closure according to claim 4 wherein said overmoulding encompasses the entire outer surface of said end wall (11) and skirt (12).

6. A closure according to claim 5 wherein said cap includes protrusions (18) on the exterior thereof to engage said overmoulding.

7. A closure according to any preceding claim wherein the material of said cap (10) and the material of said seal (14) are of different colours.

8. A method of injection moulding a plastics closure, the method comprising:
moulding a cap having an aperture in the wall thereof;
substituting an outer mould part to define an injection path through said aperture;
backing-off an inner mould part to define a seal cavity; and
moulding a seal through said injection path.

9. A method according to claim 8 wherein an injection moulding machine has a pivotable platten, the outer mould part being substituted as the inner mould part and freshly moulded cap pivots from a first to a second moulding position.

10. A method according to claim 8 or claim 9 wherein said inner mould part unscrews to define the seal cavity.
